# EUROPEAN PATENT SPECIFICATION

(11) **EP 0 640 672 B1**
(45) Date of publication and mention of the grant of the patent: **11.03.1998**
(21) Application number: 94306335.4
(22) Date of filing: 26.08.1994
(51) Int. Cl.: C09J 4/06

(54) **Anaerobically-curable flexible sealant compositions**
Anaerob härtende biegsame Dichtstoffzusammensetzungen
Compositions d'étanchéité flexibles à durcissement anaérobie

(30) Priority: 27.08.1993 IE 63493
(43) Date of publication of application: 01.03.1995
(73) Proprietor: LOCTITE (IRELAND) LIMITED, Dublin 24 (IE)
(72) Inventor: Wrobel, Peter, Templeogue, Dublin 16 (IE); Houlihan, James, Kilrush, Co. Clare (IE)
(74) Representative: Marchant, James Ian

(56) References cited:
- GB-A- 2 138 832
- GB-A- 3 899 382
- US-A- 3 428 614
- US-A- 4 612 384
- DATABASE WPI Week 7801, Derwent Publications Ltd., London, GB; AN 78-01300A & JP-A-52 138 586 (TOA GOSEI CHEM IND) 18 November 1977

## Description

This invention relates to anaerobically-curable sealant compositions which give flexible products when cured. Such compositions are particularly useful for forming a seal between two surfaces such as flanges which are subject to slight movement, for example as a result of differential heat expansion.

Flange sealant materials can be subjected to high temperatures and solvent environments, particularly in a motor vehicle engine. It is desirable that the materials maintain their flexibility and integrity under such conditions and also when they return to normal, ambient conditions.

U.S. Patent 4,985,523 Mochizuki et. al. describes an anaerobically curing adhesive sealing composition comprising
(A) a methacrylate prepolymer having a urethane structure in the main chain thereof and having an average molecular weight of 10,000 or more, and
(B) a (meth)acrylate prepolymer having a urethane structure in the main chain thereof and an average molecular weight of at most 5,000
(C) a mono (meth)acrylate monomer represented by the formula (I) 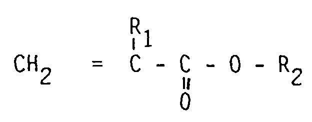 wherein R₁ represents a hydrogen atom or a methyl group; and R₂ represents

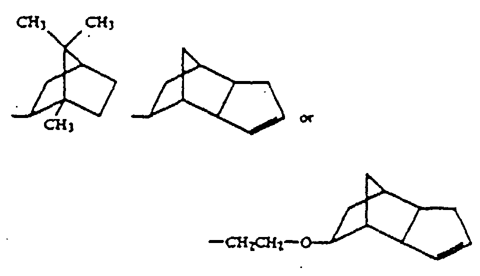

Resins having an average molecular weight of 10,000 or more are not readily available for use as prepolymer (A). Also the monomers (C) are quite specific.

U.S. Patent 4,439,600 Moran describes polymerizable compositions which form highly flexible rubber-like polymers or elastomers. The compositions comprise
(A) a moderate-to-long chain di or polyfunctional prepolymer having vinyl reactive ends, and
(B) a mono(meth)acrylate monomer, such as 3-phenoxy-2-hydroxypropyl methacrylate.

All of the prepolymers in the Moran examples were made by reacting a polyether diol or a polyester diol with an aromatic diisocyanate i.e. toluene diisocyanate.

Tests have shown that while the products of the Moran examples have high flexibility when cured, this flexibility is lost on ageing at elevated temperature.

U.S. Patent 5,116,558 Wrobel et. al. describes 2-part compositions for use in forming gaskets by injection. The compositions comprise
(A) a moderate-to-long chain di or polyfunctional prepolymer having vinyl reactive ends, and
(B) a mono (meth)acrylate monomer, such as phenyl substituted alkyl (meth)acrylates which are particularly preferred, especially phenyl propyl methacrylate, because the resulting polymers have better flexibility at high temperatures (up to 150°) than those made from other monomers.

However it has now been found that the degree of flexibility is relatively low and the materials themselves are substantially weaker, especially after ageing as compared to the compositions of the present invention.

The present invention provides a one-part anaerobically curable sealant composition comprising urethane (meth)acrylate prepolymers, one or more phenyl substituted mono (meth)acrylate monomers which are miscible with or soluble in the prepolymers, and conventional curatives for anaerobic compositions, characterized in that:
i) the urethane (meth)acrylate prepolymers comprise a combination of
   (1) a flexible urethane type (meth)acrylate prepolymer (A) of from 4,000 to less than 10,000 average molecular weight and a second urethane type (meth)acrylate prepolymer (B) of from 1,000 to 3,000 average molecular weight or
   (2) a flexible urethane type (meth)acrylate prepolymer (A) of more than 3,000 to less than 10,000 average molecular weight and a second urethane type (meth)acrylate prepolymer (B) of from 1,000 to 2,000 average molecular weight,
   wherein both prepolymers (A) and (B) have a urethane structure in the main chain thereof and (meth)acrylate end groups and wherein the ratio of prepolymer (A) to prepolymer (B) is from 1:1 to 3:1 on a weight basis or from 1:10 to 1:1 on a molar basis, and
ii) the phenyl substituted mono (meth)acrylate monomer component comprises from 35 to 60 percent by weight of the total composition.

The compositions of the invention utilise a prepolymer (A) which is of lower molecular weight than that of the Mochizuki patent and yet provide highly flexible materials whose flexibility is retained after high temperature ageing.

Preferably the prepolymer (A) has an average molecular weight in the range 4,000 - 9,000, more preferably 4,500-6,000. Preferably the prepolymer (B) has an average molecular weight in the range 1,000-2,000.

The high molecular weight prepolymer (A) and the low molecular weight prepolymer (B) may suitably be present in the composition in a weight ratio of from 1:1 to 3:1 and/or a molar ratio of from 1:10 to 1:1.

Preferably the prepolymer (A) has an aliphatic urethane structure in the main chain thereof. More preferably the prepolymer (B) also has an aliphatic urethane structure in the main chain thereof. This is in contrast to the usual urethane-type prepolymers which are made by use of an aromatic diisocyanate, particularly toluene diisocyanate.

One or both of the prepolymers (A) and (B) is preferably synthesised by use of an aliphatic diisocyanate. More preferably the polyester diol or polyether diol reacted with the diisocyanate is also free of aromatic groups in the chain structure. Urethane-type prepolymers having an aliphatic backbone structure are generally more expensive than similar prepolymers with an aromatic backbone structure but they are preferred because it has been found that they impart better heat resistance to the flexible materials.

The comonomer (C) may suitably be present in an amount of 35 - 60%, preferably 40-55%, by weight of the total composition. If the comonomer (C) is present in an amount exceeding 60% by weight, then the extensibility of the flexible product is reduced, while if the amount is less than 35% by weight the temperature resistance of the flexible product is affected. The presence of a phenyl substituent group on the comonomer (C) has been found to impart temperature resistance to the flexible product.

Preferred comonomers (C) are phenyl substituted alkyl (meth)acrylates particularly 3-phenylpropyl methacrylate and/or 2-phenylethyl methacrylate. Phenoxyethyl acrylate or benzyl methacrylate may also be used, preferably in combination with 3-phenylpropyl methacrylate and/or 2-phenylethyl methacrylate. As well as helping to give flexible temperature resistant products the co-monomers being diluents in the composition act as viscosity control agents because the prepolymers (A) and (B) are generally of high viscosity.

The prepolymers (A) and (B) preferably comprise polyether-urethane and/or polyester-urethane derivatives which may be synthesised in a well known manner by reacting a polyester diol or a polyether diol with a diisocyanate and reacting the resulting product with a polymerizable (meth)acrylate acid ester.

In addition to the prepolymers (A) and (B) and the comonomers (C), the compositions of the invention also contain conventional ingredients of an anaerobic cure system including an initiator and accelerator(s) as well as other additives known to the art which may be employed as needed, including a stabiliser, chelator and/or inhibitor and a filter. Reference is directed to U.S. Patents 4 439 600 Moran and 5 116 558 Wrobel et al. for detailed information on the cure system and other additives. The ingredients in addition to the prepolymer (A) and B and comonomers (C) may suitably comprise 5-15% by weight of the total composition.

The compositions of the present invention, when cured, provide products which combine flexibility with toughness, resistance to high temperatures, resistance to heat ageing and resistance to solvents or oils. They are particularly suitable for flange sealing applications. Typically acrylic materials which have the requisite toughness and heat resistance for a vehicle engine environment only have an extension to break of 60-70%. With the compositions of the invention flexible products having an extension to break of 70%, preferably over 100%, and particularly in the range 130-180% can be obtained.

The invention is illustrated in the following examples. Except where otherwise specified, the prepolymers used in the examples were the following:

Prepolymer (A) - Acrylate terminated aliphatic urethane polyether (M.W. 5000) - an aliphatic urethane acrylate commercially available as Ebecryl 230 from UCB,B - 1620 Drogenbos, Belgium. According to the manufacturer's information it has a Höppler viscosity at 25°C of 40,000 mPa s and a molecular weight of 5000.

Prepolymer (B) - Acrylate terminated aliphatic urethane polyester (m.w. 1500) - an aliphatic polyester/urethane acrylate commercially available under the Trade Mark Genomer D1500B from Hans Rahn & Co., Zurich, Switzerland. According to the manufacturer's information it is a molecular weight of approximately 1500 and a Brookfield viscosity at 25°C of 900,000 and at 60°C of 20,000.

In each of the examples, anaerobic compositions were made up in accordance with the formulation listed. Each composition (with a copper salt actuator added thereto in the usual manner) was cured anaerobically at room temperature and the resulting flexible materials were subjected to standard tests for Elongation at Break (EB) at room temperature and after various forms of heat ageing, the tests being in accordance with ASTM D412 at a separation speed of 50 mm per minute.
NQ Stabiliser is naphthoquinone
EDTA Stabiliser is ethylene - diamine tetracetic acid

### EXAMPLE 1

| | % By Weight |
|---|---|
| Formulation | |
| (A) - Acrylate Terminated Urethane Polyether (m.w.5000) | 27.2 |
| (B) - Acrylate Terminated Urethane Polyester (m.w.1500) | 12.2 |
| 3-Phenylpropyl Methacrylate | 51.9 |
| NQ Stabiliser | 0.1 |
| EDTA Stabiliser | 0.8 |
| Saccharin | 0.9 |
| Acetyl Phenyl Hydrazine | 0.5 |
| Maleic Acid | 0.9 |
| Cumene Hydroperoxide | 1.9 |
| Silica | 3.6 |

| Material Properties | % By Weight |
|---|---|
| %Elongation to Break at RT | - 134% |
| %EB after 7 days at 150°C | - 108% |

### EXAMPLE 2

| Formulation | |
|---|---|
| (A) - Acrylate Terminated Urethane Polyether (m.w. 5000) | 26.3 |
| (B) - Acrylate Terminated Urethane Polyester (m.w. 1500) | 13.4 |
| 2-Phenylethyl Methacrylate | 30.7 |
| Phenoxyethyl Acrylate | 19.0 |
| NQ Stabiliser | 0.1 |
| EDTA Stabiliser | 0.8 |
| Saccharin | 0.9 |
| Acetyl Phenyl Hydrazine | 0.5 |
| Maleic Acid | 0.9 |
| Cumene Hydroperoxide | 1.8 |
| Silica | 5.6 |

| Material Properties | |
|---|---|
| %Elongation to Break at RT | - 135% |
| %EB after 7 days at 150°C | - 108% |
| %EB after 7 days in Motor Oil at 150°C | - 136% |
| %EB after 7 days in Water/Glycol at 150°C | - 160% |
| %EB after 7 days in ATF at 150°C | - 152% |

### EXAMPLE 3

(a) Formulation with a 1 : 1 weight ratio of Prepolymers (A) and (B)

| | |
|---|---|
| (A) - Acrylate Terminated Urethane Polyether (m.w. 5000) | 16.08 |
| (B) - Acrylate Terminated Urethane Polyester (m.w. 1500) | 16.08 |
| 3-Phenyl Propyl Methacrylate | 57.14 |
| NQ Stabiliser | 0.13 |
| EDTA Stabiliser | 0.78 |
| Saccharin | 0.91 |
| Acetyl Phenyl Hydrazine | 0.46 |

| | % By Weight |
|---|---|
| Maleic Acid | 0.91 |
| Cumene Hydroperoxide | 1.87 |
| Silica | 3.64 |
| Colour | 2.0 |

| Material Properties | |
|---|---|
| Elongation to Break at RT | = 114% |
| Elongation to Break after 7 days at 150°C | -86% |

(b) Formulation with a 1 : 1 weight ratio of Prepolymers (A) and (B) and lower and higher monomer levels

| | Lower | Higher |
|---|---|---|
| (A) - Urethane Polyether (m.w. 5000) | 30 Parts | 20 Parts |
| (B) - Urethane Polyester (m.w. 1500) | 30 Parts | 20 Parts |
| 3-Phenyl Propyl methacrylate | 40 Parts | 60 Parts |

A Cure system similar to Example 3(a) was used to make up the formulation in both cases

| Material Properties | | |
|---|---|---|
| Elongation to Break at RT | 100% | 84% |
| Elongation to Break after 7 days at 150°C | 52% | 60% |

These examples 3(a) and (b) show the maintenance of flexibility although the extension values are not as high as earlier examples.

### EXAMPLE 4 (Comparative)

Aromatic Urethane/Phenyl substituted Methacrylate combination

| | Parts by Weight |
|---|---|
| Aromatic Urethane Polyester (m.w. 3000) | 44.0 |
| 3-phenoxy-2-hydroxy propyl methacrylate | 56.0 |

The aromatic urethane polyester (m.w. 3000) was based on polydiethylene glycol adipate reacted with toluene diisocyanate and capped with hydroxyethyl methacrylate. A cure system similar to Example 3(a) was used to make up the formulation.

| Material Properties | |
|---|---|
| Elongation to Break at RT | 152% |
| Elongation to Break after 7 days at 150°C | 16% |
| Elongation to Break after 7 days in Motor Oil at 150°C | 0% |

These results indicate the good initial flexibility but poorer heat ageing performance of this type of formulation.

### EXAMPLE 5 (Comparative)

Aliphatic Urethane Resin/Aliphatic substituted methacrylate

| | Parts by Weight |
|---|---|
| (A) - Aliphatic Urethane Resin (Ebecryl 230) | 50 |
| Isobornyl Methacrylate | 50 |

| Material Properties | |
|---|---|
| Elongation at Break RT | 265% |
| Elongation at Break after 7 days at 150°C | 0% |

A cure system similar to Example 3(a) was used to make up the formulation.

The heat ageing performance is poor; the product becomes brittle after the heat ageing test.

### EXAMPLE 6 (Comparative)

A formulation was made up in accordance with Example 1 of U.S. Patent 4,439,600 Moran and cured. The resulting flexible material was compared with the product of Example 2 of the present application.

| | Moran Patent | Present Application |
|---|---|---|
| | Example 1 | Example 2 |
| Initial % Extension to Break | 112 | 134 |
| | | |
| After 7 Days at 150°C | 8 | 108 |
| | | |
| After 7 Days in Oil at 150°C | 36 | 136 |
| | | |
| After 7 Days in Glycol at 150°C | Broken | 160 |

The results show that while the Moran product has high flexibility when cured, this flexibility is lost on ageing. Similar results were found with other Examples in the Moran patent.

## Claims

1. A one-part anaerobically curable sealant composition comprising urethane (meth)acrylate prepolymers, one or more phenyl substituted mono (meth)acrylate monomers which are miscible with or soluble in the prepolymers, and conventional curatives for anaerobic compositions, characterized in that:
i) the urethane (meth)acrylate prepolymers comprise a combination of
(1) a flexible urethane type (meth)acrylate prepolymer (A) of from 4,000 to less than 10,000 average molecular weight and a second urethane type (meth)acrylate prepolymer (B) of from 1,000 to 3,000 average molecular weight or
(2) a flexible urethane type (meth)acrylate prepolymer (A) of more than 3,000 to less than 10,000 average molecular weight and a second urethane type (meth)acrylate prepolymer (B) of from 1,000 to 2,000 average molecular weight,
wherein both prepolymers (A) and (B) have a urethane structure in the main chain thereof and (meth)acrylate end groups and wherein the ratio of prepolymer (A) to prepolymer (B) is from 1:1 to 3:1 on a weight basis or from 1:10 to 1:1 on a molar basis, and
ii) the phenyl substituted mono (meth)acrylate monomer component comprises from 35 to 60 percent by weight of the total composition.

2. The composition as claimed in claim 1 wherein the urethane (meth)acrylate prepolymers comprise a combination of a flexible urethane type (meth)acrylate prepolymer (A) of from 4,000 to less than 10,000 average molecular weight and a second urethane type (meth)acrylate prepolymer (B) of from 1,000 to 3,000 average molecular weight.

3. The composition as claimed in claim 1 wherein the urethane (meth)acrylate prepolymers comprise a combination of a flexible urethane type (meth)acrylate prepolymer (A) of more than 3,000 to less than 10,000 average molecular weight and a second urethane type (meth)acrylate prepolymer (B) of from 1,000 to 2,000 average molecular weight.

4. A composition as claimed in any of Claims 1 to 3 wherein the prepolymer (A) has an average molecular weight of from 4,500 to 6,000.

5. A composition as claimed in Claim 2 wherein the prepolymer (B) has an average molecular weight of from 1,000 to 2,000.

6. A composition as claimed in any of Claims 1 to 5 wherein prepolymer (A), prepolymer (B), or both prepolymer (A) and (B) have an aliphatic urethane structure in the main chain thereof.

7. A composition as claimed in any of Claims 1 to 6 wherein the urethane (meth)acrylate prepolymers (A) and (B) are independently (meth)acrylate terminated polyester urethanes, (meth)acrylate terminated polyether urethanes, or mixtures thereof.

8. A composition as claimed in any of Claims 1 to 7 wherein the phenyl substituted mono (meth)acrylate monomer component (C) comprises from 40 to 55 percent by weight of the total composition.

9. A composition as claimed in any of Claims 1 to 8 wherein the phenyl substituted mono (meth)acrylate monomer component (C) is 3-phenylpropyl methacrylate, 2-phenylethyl methacrylate or a mixture thereof.

10. A composition as claimed in any of Claims 1 to 8 wherein the phenyl substituted mono (meth)acrylate monomer component (C) is phenoxyethyl acrylate benzylmethacrylate or combinations thereof with 3-phenylpropyl methacrylate, 2-phenylethyl methacrylate, or both.

11. A composition as claimed in any of Claims 1 to 10 wherein the ratio of prepolymer (A) to prepolymer (B) is from 1:1 to 3:1 on a weight basis.

12. A composition as claimed in any of Claims 1 to 11 further comprising conventional stabilizers and additives.

13. A composition as claimed in Claim 12 wherein the conventional curatives, stabilizers and additives comprise from 5 to 15 percent by weight of the total composition.

14. A composition as claimed in Claim 1 wherein prepolymer (A) has an average molecular weight of from 4,500 to 6,000, prepolymer (B) has an average molecular weight of from 1,000 to 2,000, and the weight ratio of prepolymer (A) to prepolymer (B) is from 1:1 to 3:1.

15. A composition as claimed in any of Claims 1 to 14 wherein the urethane (meth)acrylate prepolymers (A) and (B) are independently (meth)acrylate terminated polyester urethanes, (meth)acrylate terminated polyether urethanes or mixtures of the foregoing.

16. A composition as claimed in Claim 14 wherein one of the urethane (meth)acrylate prepolymers (A) and (B) is a (meth)acrylate terminated polyester urethane and the other is a (meth)acrylate terminated polyether urethane.

## Patentansprüche

1. Anaerob härtbare Einkomponentendichtmittelzusammensetzung, umfassend Urethan(meth)acrylatvorpolymere, ein oder mehrere phenylsubstituierte Mono(meth)acrylatmonomere, welche mit den Vorpolymeren mischbar oder darin löslich sind, und herkömmliche Härtungsmittel für anaerobe Zusammensetzungen, dadurch gekennzeichnet, daß:
i) die Urethan(meth)acrylatvorpolymere eine Kombination aus
(1) einem flexiblen urethanartigen (Meth)acrylatvorpolymer (A) mit einem mittleren Molekulargewicht von 4000 bis weniger als 10000 und einem zweiten urethanartigen (Meth)acrylatvorpolymer (B) mit einem mittleren Molekulargewicht von 1000 bis 3000 oder
(2) einem flexiblen urethanartigen (Meth)acrylatvorpolymer (A) mit einem mittleren Molekulargewicht von mehr als 3000 bis weniger als 10000 und einem zweiten urethanartigen (Meth)acrylatvorpolymer (B) mit einem mittleren Molekulargewicht von 1000 bis 2000
umfassen, wobei sowohl Vorpolymer (A) als auch Vorpolymer (B) in ihrer Hauptkette eine Urethanstruktur und (Meth)acrylat-Endgruppen besitzen und das Verhältnis von Vorpolymer (A) zu Vorpolymer (B) 1:1 bis 3:1 auf Gewichtsbasis oder 1:10 bis 1:1 auf Molbasis beträgt, und
ii) die phenylsubstituierte Mono(meth)acrylatmonomerkomponente 35 bis 60 Gewichtsprozent der gesamten Zusammensetzung ausmacht.

2. Zusammensetzung nach Anspruch 1, worin die Urethan(meth)acrylatvorpolymere eine Kombination aus einem flexiblen urethanartigen (Meth)acrylatvorpolymer (A) mit einem mittleren Molekulargewicht von 4000 bis weniger als 10000 und einem zweiten urethanartigen (Meth)acrylatvorpolymer (B) mit einem mittleren Molekulargewicht von 1000 bis 3000 umfassen.

3. Zusammensetzung nach Anspruch 1, worin die Urethan(meth)acrylatvorpolymere eine Kombination aus einem flexiblen urethanartigen (Meth)acrylatvorpolymer (A) mit einem mittleren Molekulargewicht von mehr als 3000 bis weniger als 10000 und einem zweiten urethanartigen (Meth)acrylatvorpolymer (B) mit einem mittleren Molekulargewicht von 1000 bis 2000 umfassen.

4. Zusammensetzung nach irgendeinem der Ansprüche 1 bis 3, worin das Vorpolymer (A) ein mittleres Molekulargewicht von 4500 bis 6000 besitzt.

5. Zusammensetzung nach Anspruch 2, worin das Vorpolymer (B) ein mittleres Molekulargewicht von 1000 bis 2000 besitzt.

6. Zusammensetzung nach irgendeinem der Ansprüche 1 bis 5, worin Vorpolymer (A), Vorpolymer (B) oder sowohl Vorpolymer (A) als auch Vorpolymer (B) eine aliphatische Urethanstruktur in ihrer Hauptkette besitzen.

7. Zusammensetzung nach irgendeinem der Ansprüche 1 bis 6, worin die Urethan(meth)acrylatvorpolymere (A) und (B) unabhängig voneinander (Meth)acrylat-terminierte Polyesterurethane, (Meth)acrylatterminierte Polyetherurethane oder Mischungen davon sind.

8. Zusammensetzung nach irgendeinem der Ansprüche 1 bis 7, worin die phenylsubstituierte Mono(meth)acrylatmonomerkomponente (C) 40 bis 55 Gewichtsprozent der gesamten Zusammensetzung ausmacht.

9. Zusammensetzung nach irgendeinem der Ansprüche 1 bis 8, worin die phenylsubstituierte Mono(meth)acrylatmonomerkomponente (C) 3-Phenylpropylmethacrylat, 2-Phenylethylmethacrylat oder eine Mischung davon ist.

10. Zusammensetzung nach irgendeinem der Ansprüche 1 bis 8, worin die phenylsubstituierte Mono(meth)acrylatmonomerkomponente (C) Phenoxyethylacrylat, Benzylmethacrylat oder Kombinationen davon mit 3-Phenylpropylmethacrylat, 2-Phenylethylmethacrylat oder beiden sind.

11. Zusammensetzung nach irgendeinem der Ansprüche 1 bis 10, worin das Verhältnis von Vorpolymer (A) zu Vorpolymer (B) 1:1 bis 3:1 auf Gewichtsbasis beträgt.

12. Zusammensetzung nach irgendeinem der Ansprüche 1 bis 11, die darüber hinaus herkömmliche Stabilisatoren und Additive umfaßt.

13. Zusammensetzung nach Anspruch 12, worin die herkömmlichen Härtungsmittel, Stabilisatoren und Additive 5 bis 15 Gew.-% der gesamten Zusammensetzung ausmachen.

14. Zusammensetzung nach Anspruch 1, worin das Vorpolymer (A) ein mittleres Molekulargewicht von 4500 bis 6000 besitzt, das Vorpolymer (B) ein mittleres Molekulargewicht von 1000 bis 2000 besitzt und das Gewichtsverhältnis von Vorpolymer (A) zu Vorpolymer (B) 1:1 bis 3:1 beträgt.

15. Zusammensetzung nach irgendeinem der Ansprüche 1 bis 14, worin die Urethan(meth)acrylatvorpolymere (A) und (B) unabhängig voneinander (Meth)acrylat-terminierte Polyesterurethane, (Meth)acrylat-terminierte Polyetherurethane oder Mischungen der obengenannten sind.

16. Zusammensetzung nach Anspruch 14, worin eines der Urethan(meth)acrylatvorpolymere (A) und (B) ein (Meth)acrylat-terminiertes Polyesterurethan und das andere ein (Meth)acrylat-terminiertes Polyetherurethan ist.

## Revendications

1. Une composition d'agent d'étanchéité à composant unique, durcissable en conditions anaérobies, comprenant des prépolymères uréthanne-(méth)acrylates, un ou plusieurs monomères mono(méth)acrylates à substituant phényle, qui sont miscibles ou solubles dans les prépolymères, et des durcisseurs classiques pour compositions anaérobies, caractérisée en ce que :
i) les prépolymères uréthanne- (méth) acrylates comprennent une association de
(1) un prépolymère souple du type uréthanne à fonction (méth)acrylate (A) ayant un poids moléculaire moyen de 4000 à moins de 10 000 et un second prépolymère du type uréthanne à fonction (méth)acrylate (B) ayant un poids moléculaire moyen de 1000 à 3000, ou
(2) un prépolymère souple du type uréthanne à fonction (méth)acrylate (A) ayant un poids moléculaire moyen de plus de 3000 à moins de 10 000 et un second prépolymère du type uréthanne à fonction (méth)acrylate (B) ayant un poids moléculaire moyen de 1000 à 2000,
les deux prépolymères (A) et (B) ayant une structure d'uréthanne dans leur chaîne principale et des groupes (méth)acrylate terminaux, et le rapport du prépolymère (A) au prépolymère (B) étant compris entre 1:1 et 3:1 sur base pondérale ou entre 1:10 et 1:1 sur base molaire, et
ii) le composant monomère mono(méth)acrylate à substituant phényle constitue 35 à 60 pour cent en poids de la composition totale.

2. La composition telle que revendiquée dans la revendication 1, dans laquelle les prépolymères uréthanne-(méth) acrylates comprennent une association d'un prépolymère souple du type uréthanne à fonction (méth)acrylate (A) ayant un poids moléculaire moyen de 4000 à moins de 10 000 et d'un second prépolymère du type uréthanne à fonction (méth)acrylate (B) ayant un poids moléculaire moyen de 1000 à 3000.

3. La composition telle que revendiquée dans la revendication 1, dans laquelle les prépolymères uréthanne-(méth) acrylates comprennent une association d'un prépolymère souple du type uréthanne à fonction (méth)acrylate (A) ayant un poids moléculaire moyen de 3000 à moins de 10 000 et d'un second prépolymère du type uréthanne à fonction (méth)acrylate (B) ayant un poids moléculaire moyen de 1000 à 2000.

4. Une composition telle que revendiquée dans l'une quelconque des revendications 1 à 3, dans laquelle le prépolymère (A) a un poids moléculaire moyen de 4500 à 6000.

5. Une composition telle que revendiquée dans la revendication 2, dans laquelle le prépolymère (B) a un poids moléculaire moyen de 1000 à 2000.

6. Une composition telle que revendiquée dans l'une quelconque des revendications 1 à 5, dans laquelle le prépolymère (A), le prépolymère (B), ou chacun du prépolymère (A) et du prépolymère (B), a une structure d'uréthanne aliphatique dans sa chaîne principale.

7. Une composition telle que revendiquée dans l'une quelconque des revendications 1 à 6, dans laquelle les prépolymères uréthanne-(méth)acrylates (A) et (B) sont indépendamment des polyester-uréthannes à terminaisons (méth)acrylate, des polyéther-uréthannes à terminaisons (méth)acrylate, ou des mélanges d'entre eux.

8. Une composition telle que revendiquée dans l'une quelconque des revendications 1 à 7, dans laquelle le composant monomère mono(méth)acrylate à substituant phényle (C) constitue 40 à 55 pour cent en poids de la composition totale.

9. Une composition telle que revendiquée dans l'une quelconque des revendications 1 à 8, dans laquelle le composant monomère mono(méth)acrylate à substituant phényle (C) est le méthacrylate de 3-phénylpropyle, le méthacrylate de 2-phényléthyle ou un mélange d'entre eux.

10. Une composition telle que revendiquée dans l'une quelconque des revendications 1 à 8, dans laquelle le composant monomère mono(méth)acrylate à substituant phényle (C) est l'acrylate de phénoxyéthyle, le méthacrylate de benzyle ou une association de ceux-ci avec le méthacrylate de 3-phénylpropyle, le méthacrylate de 2-phényléthyle ou des deux.

11. Une composition telle que revendiquée dans l'une quelconque des revendications 1 à 10, dans laquelle le rapport du prépolymère (A) au prépolymère (B) est compris entre 1:1 et 3:1 sur base pondérale.

12. Une composition telle que revendiquée dans l'une quelconque des revendications 1 à 11, contenant, de plus, des stabilisants et additifs classiques.

13. Une composition telle que revendiquée dans la revendication 12, dans laquelle les durcisseurs, stabilisants et additifs classiques constituent 5 à 15 pour cent en poids de la composition totale.

14. Une composition telle que revendiquée dans la revendication 1, dans laquelle le prépolymère (A) a un poids moléculaire moyen de 4500 à 6000, le prépolymère (B) a un poids moléculaire moyen de 1000 à 2000 et le rapport en poids du prépolymère (A) au prépolymère (B) est compris entre 1:1 et 3:1.

15. Une composition telle que revendiquée dans l'une quelconque des revendications 1 à 14, dans laquelle les prépolymères uréthanne-(méth)acrylates (A) et (B) sont indépendamment des polyester-uréthannes à terminaison (méth)acrylate, des polyéther-uréthannes à terminaison (méth)acrylate ou des mélanges des précédents.

16. Une composition telle que revendiquée dans la revendication 14, dans laquelle l'un des prépolymères uréthanne-(méth)acrylates (A) et (B) est un polyester-uréthanne à terminaison (méth)acrylate et l'autre est un polyéther-uréthanne à terminaison (méth)acrylate.
